# EUROPEAN PATENT APPLICATION

(11) **EP 3 171 579 A2**
(43) Date of publication of application: **24.05.2017**
(21) Application number: 16000313.3
(22) Date of filing: 08.02.2016
(51) Int. Cl.: H04M 1/725

(54) **MOBILE DEVICE AND METHOD OF CONTROLLING THEREFOR**

(30) Priority: 23.11.2015 KR 20150163943
(71) Applicant: LG Electronics Inc., Seoul 07336 (KR)
(72) Inventor: KIM, Jongsup, Seoul 06772 (KR); Kong, Daejin, Seoul 06772 (KR)
(74) Representative: Beyer, Andreas

(57) **Abstract**

The present invention relates to a mobile device and a method of controlling therefor. The method includes the steps of, if an input for touching the specific screen image for more than prescribed time is received from a user, recognizing the specific screen image, extracting tag information from the recognized specific screen image, executing a specific application related to the specific screen image based on the extracted tag information and displaying an execution screen of the specific application.

## Description

This application claims the benefit of earlier filing date and right of priority to Korean Patent Application No. 10-2015-0163943, filed on November 23, 2015, which is hereby incorporated by reference.

### BACKGROUND OF THE INVENTION

### Field of the Invention

The present invention relates to a mobile device and a method of controlling therefor. More particularly, when an input for selecting a screen image is received from a user, the present invention relates to a mobile device capable of executing an application related to the screen image using an image recognition technology and a deep link technology and displaying an application execution screen and a method of controlling therefor.

### Discussion of the Related Art

Recently, due to the development of IT technologies, a mobile device has become a big issue in our daily lives. A function of a mobile terminal is diversifying. For instance, the function of the mobile terminal may include data and audio communication, picture and video capturing via a camera, voice recording, playing a music file via a speaker system and outputting an image or a video on a display unit. Some terminals perform a function of an electronic game or a function of a multimedia player. In particular, a latest mobile terminal can receive a multicast signal providing visual contents such as a broadcast, a video and a television program.

As a function of a terminal is diversified, the terminal is implemented in a multimedia player form equipped with complex functions including capturing a picture or a video, playing music or a video file, game, receiving a broadcast and the like for example. In particular, a screenshot function generating a screen image by capturing a current screen in a mobile device is one of important functions.

A legacy screen image UX is stored in a specific folder in a manner that a user executes a function of capturing a current screen. For example, if a user pushes a power button of a specific mobile device and a volume button at the same time, a current screen of the mobile device is captured as a screen image and the captured screen image is stored in a specific folder.

Yet, since a screen image is generated by an image of a screen of a mobile device at current timing in previous mobile device environment, although screen information is changed later, there is no method of reflecting the changed screen information to the screen image. Hence, a user may feel inconvenience.

### SUMMARY OF THE INVENTION

Accordingly, the present invention is directed to an apparatus and method thereof that substantially obviate one or more problems due to limitations and disadvantages of the related art.

An object of the present invention is to provide a mobile device capable of immediately accessing sub concept information of an application using a screen image only in a manner of executing an application related to the screen image using tag information of the screen image and displaying an application execution screen using a deep link technology when an input for selecting the screen image is received and a method of controlling therefor.

Another object of the present invention is to provide a mobile device capable of executing an application related to a screen image and displaying an execution screen of the application when a touch input for dragging the screen image in the downward direction is received from a user in a state of displaying the screen image and a method of controlling therefor.

Another object of the present invention is to provide a mobile device capable of changing a configuration of a mobile device based on system configuration information when a touch input for selecting a screen image is received from a user in case that the screen image includes the system configuration information and a method of controlling therefor.

The other object of the present invention is to provide a mobile device capable of displaying an application execution screen related to a specific screen image when a plurality of screen images are displayed and an input for selecting the specific screen image from a plurality of the screen images is received from a user and a method of controlling therefor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment, a mobile device includes a memory configured to store a plurality of screen images, an input unit configured to receive an input for selecting a specific screen image from a plurality of the screen images from a user, if an input for touching the specific screen image for more than prescribed time is received from a user, a controller configured to recognize the specific screen image, the controller configured to extract tag information from the recognized specific screen image, the controller configured to execute a specific application related to the specific screen image based on the extracted tag information, the controller configured to display an execution screen of the specific application and a display unit configured to display at least one of the specific screen image and the execution screen of the application related to the specific image according to a control command received from the controller.

To further achieve these objects and other advantages and in accordance with the purpose of the invention, as embodied and broadly described herein, according to a different embodiment, a method of controlling a mobile device includes the steps of, if an input for touching the specific screen image for more than prescribed time is received from a user, recognizing the specific screen image, extracting tag information from the recognized specific screen image, executing a specific application related to the specific screen image based on the extracted tag information and displaying an execution screen of the specific application.

According to one embodiment of the present invention, when an input for selecting a screen image is received, it is able to immediately access sub concept information of an application using the screen image only in a manner of executing an application related to the screen image using tag information of the screen image and displaying an application execution screen using a deep link technology. Hence, since it is not necessary for the user to execute the application again from the first step, it is able to enhance user convenience.

According to another embodiment of the present invention, when a touch input for dragging a screen image in the downward direction is received from a user in a state of displaying the screen image, it is able to execute an application related to the screen image and display an execution screen of the application. Hence, since it is able to provide a screen updated by latest information to a user, it is able to enhance user convenience.

According to another embodiment of the present invention, when a screen image includes system configuration information, if a touch input for selecting the screen image is received from a user, it is able to change a configuration of a mobile device based on the system configuration information. Hence, the screen image can be utilized as preset information for changing the system configuration in the future and can be shared with a different mobile device. If a user to which the screen image is provided is not good at using a smart device, the user can easily change system configuration using the screen image only. Hence, it is able to enhance user convenience.

According to the other embodiment of the present invention, when a plurality of screen images are displayed and an input for selecting a specific screen image from a plurality of the screen images is received from a user, it is able to display an application execution screen related to the specific screen image. Hence, a user can configure a screen with a plurality of screen images used for checking latest update status. If the user selects the specific screen image, it is able to immediately display the application execution screen. Hence, it is able to enhance user convenience.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1A is a block diagram illustrating a mobile device related to the present invention;
FIGS. 1B and 1C are conceptual diagrams illustrating a different view of one embodiment of a mobile device related to the present invention;
FIG. 2 is a configuration diagram illustrating a mobile device according to one embodiment of the present invention;
FIG. 3A is a flowchart illustrating a method of controlling a mobile device according to one embodiment of the present invention;
FIG. 3B is a flowchart illustrating a method of controlling a mobile device according to one embodiment of the present invention;
FIG. 4 is a diagram illustrating a process of extracting tag information by recognizing a screen image according to one embodiment of the present invention;
FIG. 5 is a diagram illustrating a method of transmitting a screen image and tag information at the same time when the screen image is shared with an external device according to one embodiment of the present invention;
FIG. 6 is a diagram illustrating a method of activating a screen image according to one embodiment of the present invention;
FIG. 7 is a diagram illustrating a method of updating screen information with latest information in a manner of dragging down a screen image according to one embodiment of the present invention;
FIG. 8 is a diagram illustrating a case that a screen image includes system configuration information of a mobile device according to one embodiment of the present invention;
FIG. 9 is a diagram illustrating a case that a screen image includes configuration information of a specific application according to one embodiment of the present invention;
FIG. 10 is a diagram illustrating a case that a screen image includes home screen information of a mobile device according to one embodiment of the present invention;
FIG. 11 is a diagram illustrating a method of implementing a screen image form in a manner of combining a plurality of screen images with each other according to one embodiment of the present invention;
FIG. 12 is a diagram illustrating a method of capturing an external device screen using a camera and storing a captured image as an image transformed into an application screen of a mobile device version in a memory according to one embodiment of the present invention;
FIG. 13 is a diagram illustrating a case that a screen image includes multimedia playback information according to one embodiment of the present invention;
FIG. 14 is a diagram illustrating a case that a screen image includes navigation information according to one embodiment of the present invention;
FIG. 15 is a diagram illustrating a case that a screen image corresponds to a web browser screen according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

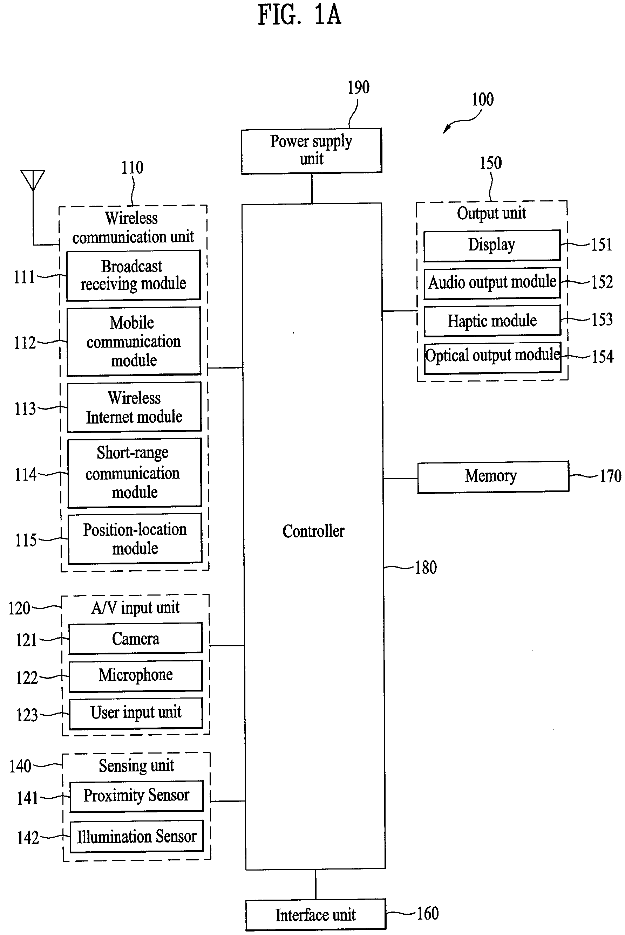

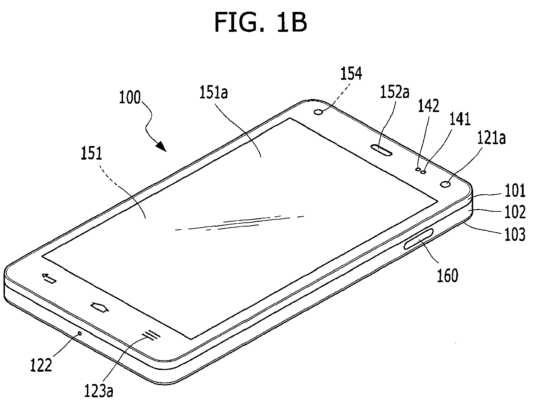

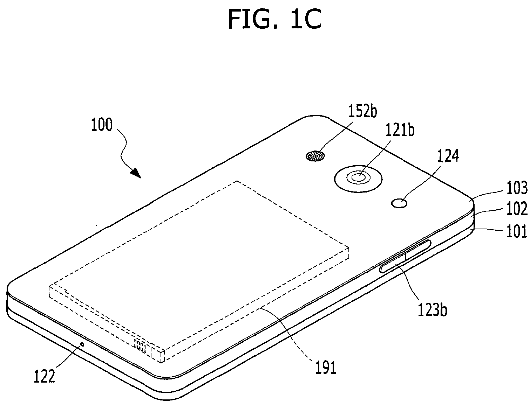

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 processes signals, data, informations and the like inputted or outputted through the above-mentioned components and/or runs application programs saved in the memory 170, thereby processing or providing a user with appropriate informations and/or functions.

The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least one portion of the respective components mentioned in the foregoing description can cooperatively operate to embody operations, controls or controlling methods of the mobile terminal according to various embodiments of the present invention mentioned in the following description. Moreover, the operations, controls or controlling methods of the mobile terminal can be embodied in the mobile terminal by running at least one or more application programs saved in the memory 170.

Referring still to FIG. 1A, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal.

In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (AI), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may be provided with the display unit 151, the 1st audio output unit 152a, the 2nd audio output unit 152b, the proximity sensor 141, the illumination sensor 142, the light output unit 154, the 1st camera 121a, the 2nd camera 121b, the 1st manipulating unit 123a, the 2nd manipulating unit 123b, the microphone 122, the interface unit 160, and the like.

FIGS. 1B and 1C depict certain components as arranged on the mobile terminal.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices.

Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160.

Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Further preferred embodiments will be described in more detail with reference to additional drawing figures. It is understood by those skilled in the art that the present features can be embodied in several forms without departing from the characteristics thereof.

A web search engine indicates a software system designed to search for information of WWW (World Wide Web). Before a market of a mobile terminal is expanded, users have used a service of the web search engine using a PC (personal computer).

Recently, as the use of a mobile terminal is rapidly increasing in a manner of disseminating a huge amount of smartphones, percentage of the use of a web search engine using the mobile terminal is also increasing.

In case of using the service via a mobile terminal, it is able to not only access a web page of the web search engine using a web browser application but also access the web search engine via an application provided by the web search engine itself.

Meanwhile, services or contents provided on a web page have changed as well. Images or texts used to be provided on a legacy web page as main contents. Yet, not only the images or the texts but also such metadata as location information, tag information and the like are provided on a recent web page.

Location information corresponds to a geographical location. Similar to what is used in a GPS, the location information consists of longitude and latitude. Not only the longitude and the latitude, location information (address and the like) of an administrative district may correspond to the location information as well.

For instance, in case of a web page displaying information on a specific restaurant, the web page can include a picture of the specific restaurant, a picture (image content) of food of the restaurant and explanation (text contents) on the pictures. Additionally, location of the restaurant can be included in the location information content.

As mentioned in the foregoing description, while the recent web page provides various contents, a search result provided by the web search engine does not include information on the contents, thereby causing inconvenience. Hence, one embodiment of the present invention described in the following proposes to provide the information on the various contents on a service provided by the web search engine. In the following, a specific embodiment is explained with reference to drawings.

Meanwhile, according to the present invention, information processed in a mobile terminal can be displayed using a flexible display. Regarding this, it is explained in more detail in the following with reference to the attached drawings.

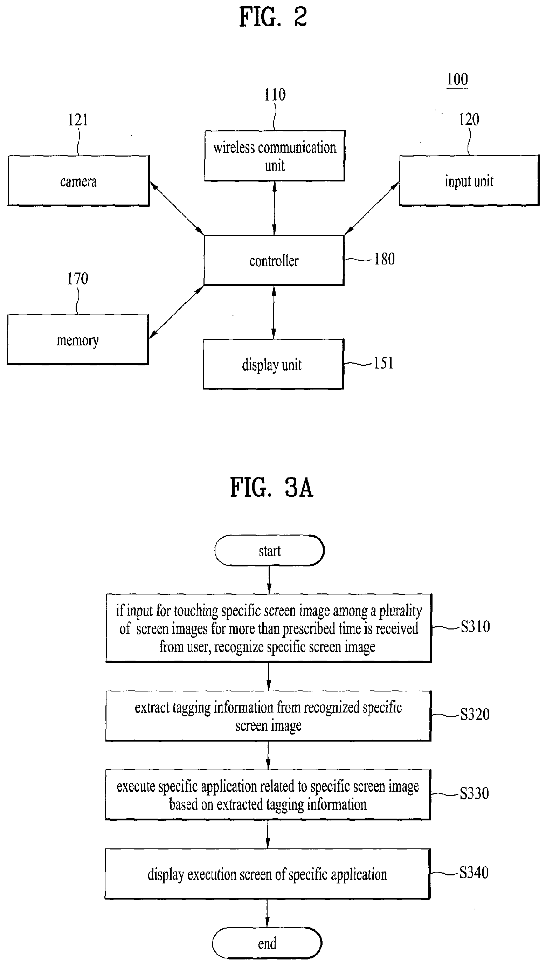

FIG. 2 is a configuration diagram for a mobile device according to one embodiment of the present invention.

As shown in FIG. 2, a mobile device 100 includes a wireless communication unit 110, an input unit 120, a camera 121, a display unit 151, a memory 170 and a controller 180.

The wireless communication unit 110 transceives data with an external device.

The input unit 120 receives an input for selecting a specific screen image from a plurality of screen images from a user.

The camera 121 captures a front of a mobile device.

The display unit 151 displays at least one of a specific image and an application execution screen related to the specific image according to a control command received from the controller 180.

The memory 170 stores a plurality of screen images.

If an input for touching a specific screen image for more than prescribed time is received from a user, the controller 180 recognizes the specific screen image, extracts tag information and metadata from the recognized specific screen image, executes a specific application related to the specific screen image based on the extracted tag information and the metadata and displays an execution screen of the specific application.

In this case, if the screen image includes specific contents, the tag information may correspond to a keyword corresponding to a searching tag capable of representing the contents or tag information.

Specifically, if a screen image corresponds to an image of which an application execution screen is captured, the tag information may indicate a URL address of an application, an application name, a text including a search word keyword, and the like.

The metadata is the structured data for data. For example, in case of a screen image, the metadata includes a date on which the screen image is generated, an aperture exposure value, location information and the like.

The controller 180 recognizes a specific screen image based on at least one selected from the group consisting of OCR recognition, a layout of a screen image, a design of the screen image and text information.

For example, if a specific screen image is captured in the middle of executing such a specific search engine as Naver, the controller 180 recognizes the specific screen image in a manner of recognizing a specific character in the image via the OCR recognition. The controller 180 can determine whether or not an application related to the specific screen image corresponds to the specific search engine based on the recognized specific screen image.

The controller 180 recognizes a specific screen image in a manner of recognizing information related to a specific search engine in the image via a layout of the screen image.

The controller 180 recognizes a specific screen image in a manner of recognizing information related to a specific search engine in the image via a design of the screen image.

The controller 180 recognizes a specific screen image in a manner of recognizing information related to a specific search engine in the image via text information included in the screen image.

FIG. 3A is a flowchart for a method of controlling a mobile device according to one embodiment of the present invention. The present invention is performed by the controller 180.

As shown in FIG. 3A, first of all, if an input for touching a specific screen image among a plurality of screen images stored in a memory for more than prescribed time is received from a user, the controller 180 recognizes the specific screen image [S310].

The controller 180 extracts tag information from the recognized specific screen image [S320].

The controller 180 executes a specific application related to the specific screen image based on the extracted tag information [S330].

The controller 180 displays an execution screen of the specific application [S340].

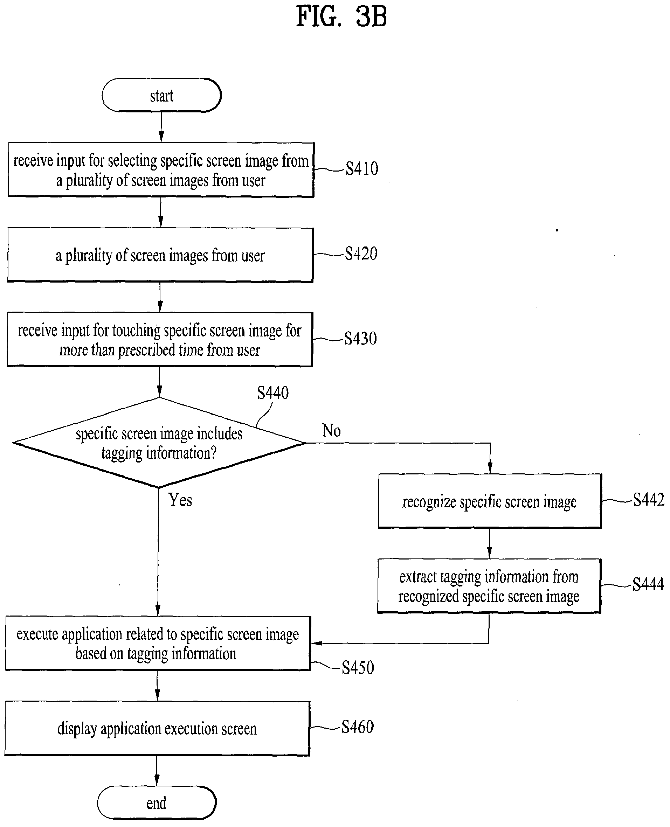

FIG. 3B is a flowchart for a method of controlling a mobile device according to one embodiment of the present invention. The present invention is performed by the controller 180.

As shown in FIG. 3B, the controller 180 receives an input for selecting a specific screen image from a plurality of screen images from a user [S410].

The controller displays the received specific screen image [S420].

The controller 180 receives an input for touching the received specific screen image for more than prescribed time from a user [S430].

The controller 180 checks whether or not the specific screen image includes tag information [S440]. In this case, the tag information corresponds to a text including a URL address of an application, an application name and a search word keyword.

If the specific screen image includes the tag information [S440], an application related to the specific screen image is executed based on the tag information [S450].

If the specific screen image does not include the tag information [S440], the controller 180 recognizes the specific screen image [S442].

The controller 180 extracts tag information and metadata from the recognized specific screen image [S444].

The controller 180 executes an application related to the specific screen image based on the tag information and the metadata [S450]. Specifically, the controller 180 executes the application related to the specific screen image based on a URL address of the application, an application name, screen information of the application, a search word and metadata of a screen image.

The controller 180 displays an execution screen of the application [S460].

According to the present invention, if an input for touching a specific screen image of a gallery album for more than prescribed time is received from a user, the controller 180 executes a specific application related to the specific screen image based on tag information included in the specific screen image and displays an execution screen of the specific application.

That is, if an input for touching a specific screen image using a deep link technology is received from a user, it is able to display an execution screen of a specific application related to the specific screen image. Hence, since the user is able to execute the application using the screen image only, thereby increasing user convenience. In this case, the deep link technology corresponds to a hypertext link making a user link to a different web page rather than a homepage on a website.

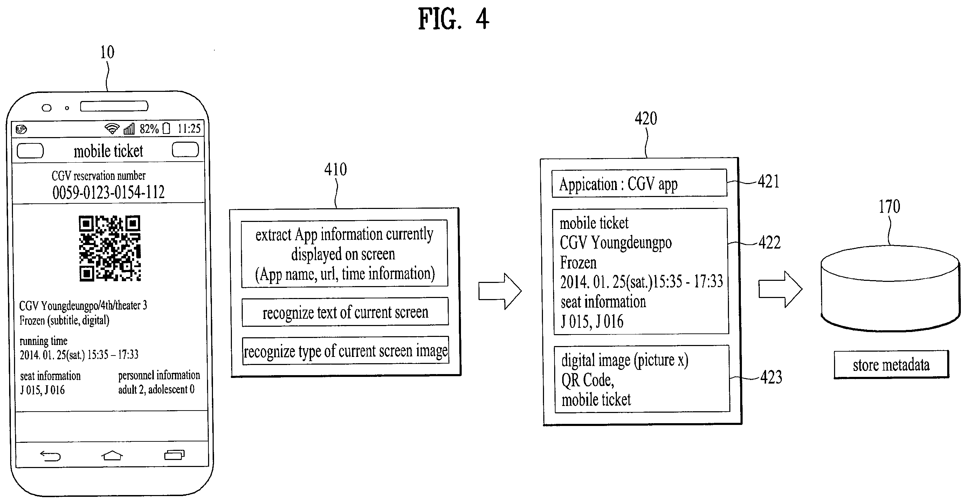

FIG. 4 is a diagram for a process of extracting tag information by recognizing a screen image according to one embodiment of the present invention.

The controller 180 extracts metadata of a specific application, extracts text information included in a screen image, recognizes a type of the screen image and analyzes the generated screen image based on one selected from the group consisting of the extracted metadata, the extracted text information and the recognized type of the screen image.

If an input for pushing a specific button is received from a user, the controller 180 captures a current screen and displays the captured screen on the display unit 151.

As shown in an embodiment 410, the controller 180 extracts application information currently displayed on a screen from a screen image 10. In this case, the application information includes an application name, a URL and time information.

The controller 180 recognizes a text of the screen image. Specifically, the controller 180 recognizes the text of the screen image using OCR (optical character recognition).

The controller 180 recognizes a type of the screen image. For example, the screen image can be categorized into a digital image, a picture and the like. If the screen image corresponds to a digital image, the screen image may become a graph image, a chart image, or a map image. If the screen image corresponds to a picture, the screen image may become a news picture.

As shown in an embodiment 420, a method of analyzing a screen image is explained.

An application name may correspond to a CGV application.

A text 422 recognized in a screen image includes 'mobile ticket', 'CGV Youndeungpo', 'Frozen', '2014. 01.25 (Sat) 15:35', and 'seat information J015'.

A type 423 of a screen image indicates that the screen image is not a picture but a digital image. The type of the screen image corresponds to a QR code and a mobile ticket.

The controller 180 stores the previously analyzed result in the memory 170.

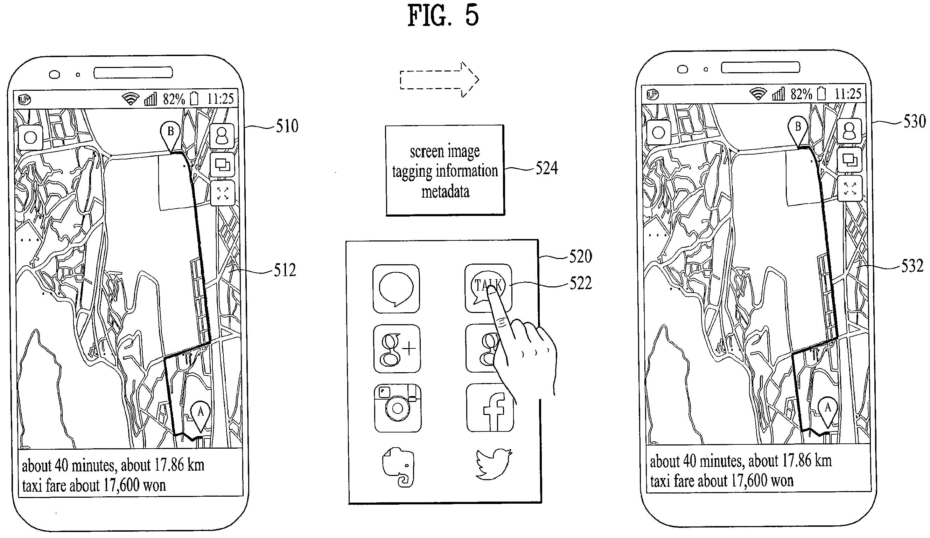

FIG. 5 is a diagram for a method of transmitting a screen image and tag information at the same time when the screen image is shared with an external device according to one embodiment of the present invention.

The controller 180 transmits a screen image, tag information of the screen image and metadata to an external device at the same time via the wireless communication unit 110.

For example, as shown in an embodiment 510, the controller 180 receives an input for selecting a screen image 512 from a user.

As shown in an embodiment 520, the controller 180 receives an input for selecting a specific SNS icon 522 configured to send the screen image 512 from a user.

The controller 180 transmits the screen image 512, tag information of the screen image and metadata 524 to an external device via the wireless communication unit 110.

As shown in an embodiment 530, a controller of a second mobile device displays a screen image identical to the screen image 512. In this case, the second mobile device includes an application identical to an application of a first mobile device and can use a deep link technology.

According to the present invention, when a user shares a screen image with a counterpart, metadata and tag information of the screen image are transmitted together to the counterpart. Hence, if the counterpart touches the shared screen image, a specific application related to the screen image is executed based on the tag information. Hence, the counterpart is also able to check information in a manner of directly accessing the specific application. Hence, it is not necessary for the counterpart to search for the information by directly executing the application, thereby increasing user convenience.

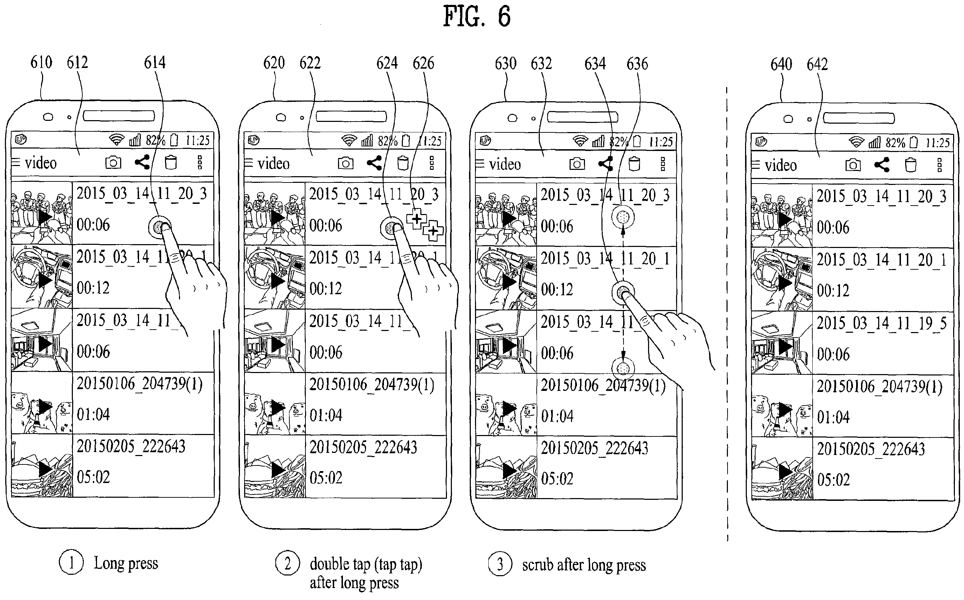

FIG. 6 is a diagram for a method of activating a screen image according to one embodiment of the present invention.

If either an input for touching a specific screen image for more than prescribed time and tapping a screen on which the specific screen image is displayed more than a prescribed number or an input for touching a specific screen image for more than prescribed time and scrubbing a screen on which the specific screen image is displayed in the upward direction or the downward direction is received from a user, the controller 180 can display an application execution screen related to the specific screen image.

As shown in an embodiment 610, if a touch input 614 for touching a specific screen image 612 for more than prescribed time is received from a user, as shown in an embodiment 640, the controller 180 displays an application execution screen 642 related to the specific screen image.

According to a different embodiment of the present invention, if a touch input equal to or greater than a reference value is received from a user for more than prescribed time, it is able to display an application execution screen.

As shown in the embodiment 610, if an input 614 for touching a specific screen image 612 with pressure equal to or greater than a prescribed value is received from a user for more than prescribed time, as shown in the embodiment 640, the controller 180 displays an application execution screen 642 related to the specific screen image.

As shown in an embodiment 620, if a touch input 624 for touching a specific screen image 622 for more than prescribed time is received from a user and an input 626 for tapping the specific screen image more than prescribed times is received from the user, as shown in the embodiment 640, the controller 180 displays the application execution screen 642 related to the specific screen image.

As shown in an embodiment 630, if a touch input 634 for touching a specific screen image 632 for more than prescribed time is received from a user and an input 636 for scrubbing the specific screen image 632 in the upward direction or the downward direction is received from the user, as shown in the embodiment 640, the controller 180 displays the application execution screen 642 related to the specific screen image.

According to the present invention, if an input for touching a screen image is received from a user, the controller can execute an application related to the screen image, thereby increasing user convenience.

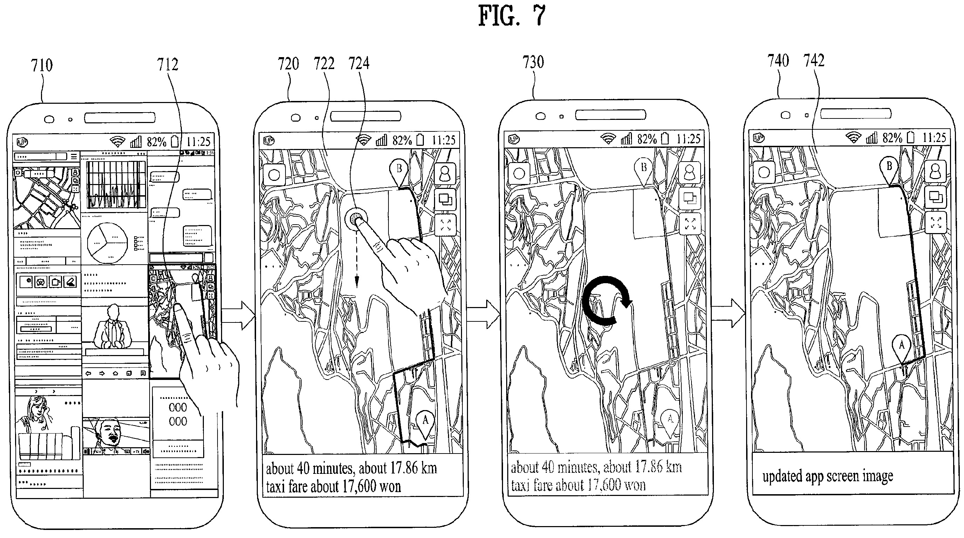

FIG. 7 is a diagram for a method of updating screen information with latest information in a manner of dragging down a screen image according to one embodiment of the present invention.

If a touch input for dragging a specific screen image in the downward direction or the upward direction is received from a user in a state that the specific screen image is displayed, the controller 180 executes a specific application related to the specific screen image and displays an execution screen of the specific application.

As shown in an embodiment 710, the controller 180 receives a touch input for selecting a specific screen image 712 from a gallery from a user.

As shown in an embodiment 720, the controller 180 receives a touch input 724 for dragging a specific screen image 722 in the upward direction or the downward direction from a user in a state that the specific screen image is displayed.

As shown in an embodiment 730, the controller 180 executes a specific application related to the specific screen image based on tag information in response to the received touch input.

As shown in an embodiment 740, the controller 180 displays an execution screen 742 of the specific application. Hence, the controller 180 can update the execution screen 742 of the specific application with latest information.

For example, in case of a bulletin board, a new post is continuously posted. In this case, since it is necessary for a user to frequently access and to check a bulletin board application, it is inconvenient for the user. According to the present invention, when a screen image includes bulletin board information, if an input for selecting the screen image is received from a user, the bulletin board application is immediately executed and the user can check a bulletin board, which is updated with the latest information, whenever the user selects the screen image, thereby increasing user convenience.

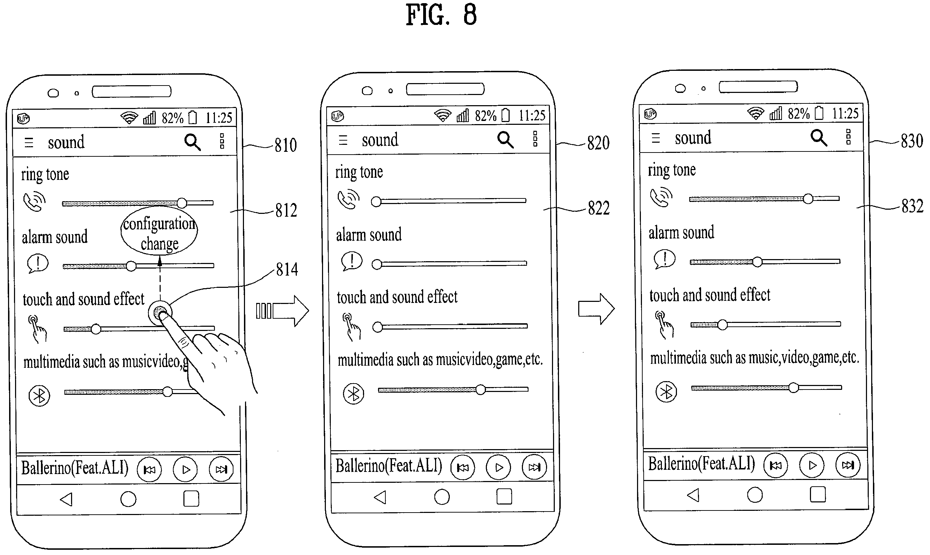

FIG. 8 is a diagram for a case that a screen image includes system configuration information of a mobile device according to one embodiment of the present invention.

When a specific screen image includes system configuration information, if a touch input for selecting the specific screen image is received from a user, the controller 180 changes configuration of a mobile device based on the system configuration information.

As shown in an embodiment 810, if a specific screen image 812 includes system configuration information, the controller 180 receives a touch input 814 for dragging the specific screen image 812 in the downward direction or the upward direction from a user.

As shown in an embodiment 820, the controller 180 executes a specific application related to the specific screen image in response to the received touch input. For example, if the specific screen image includes system volume configuration information, the controller 180 executes a system volume configuration application of a mobile device.

A current screen 822 corresponds to an execution screen of the system volume configuration application.

As shown in an embodiment 830, the controller 180 changes configuration of the mobile device based on the system configuration information included in the specific screen image 812.

A current screen 832 corresponds to an execution screen of a system volume configuration application. It is able to see that a system volume configuration is changed in a manner of being identical to the specific screen image 812.

According to the present invention, if a system configuration of a mobile device is stored as a screen image and an input for selecting the screen image is received from a user in the future, the screen image can be utilizes as a preset capable of changing configuration of the mobile device based on system configuration information.

In this case, the preset indicates to adjust an input/output rating level for each part in advance in a complex circuit system.

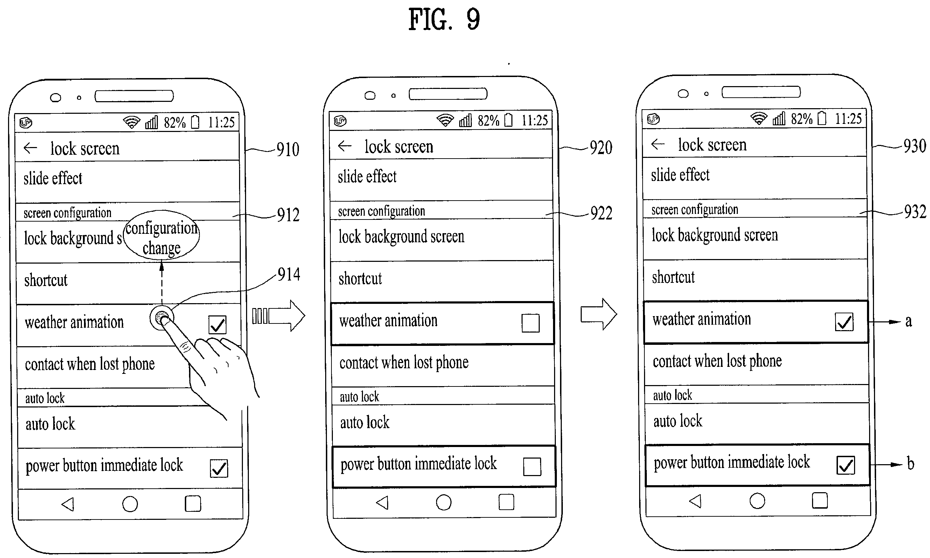

FIG. 9 is a diagram for a case that a screen image includes configuration information of a specific application according to one embodiment of the present invention.

When a specific screen image includes configuration information of a specific application, if a touch input for selecting the specific screen image is received from a user, the controller 180 changes configuration of the specific application based on the configuration information of the specific application.

As shown in an embodiment 910, if a specific screen image 912 includes configuration information of a specific application, the controller 180 receives a touch input 914 for dragging the specific screen image 912 in the downward direction or the upward direction from a user.

As shown in an embodiment 920, the controller 180 executes the specific application related to the specific screen image in response to the received touch input. For example, if the specific screen image includes lock screen application configuration information, the controller 180 executes a lock screen configuration application of a mobile device.

A current screen 922 corresponds to an execution screen of the lock screen configuration application.

As shown in an embodiment 930, the controller 180 changes configuration of the specific application based on the configuration information of the specific application included in the specific screen image 912.

A current screen 932 corresponds to the execution screen of the lock screen configuration application. It is able to see that the execution screen is changed in a manner of being identical to the specific screen image 912. In particular, similar to the specific screen image 912, a weather animation item (a) and a power button immediate lock item (b) are checked in the current screen 932.

According to the present invention, if application configuration is stored as a screen image and an input for selecting the screen image is received from a user in the future, the screen image can be utilized as a preset capable of changing the application configuration based on application configuration information.

And, if the screen image including the application configuration information is shared with a counterpart, the counterpart, who is not good at using a smartphone, can easily change application configuration using the screen image.

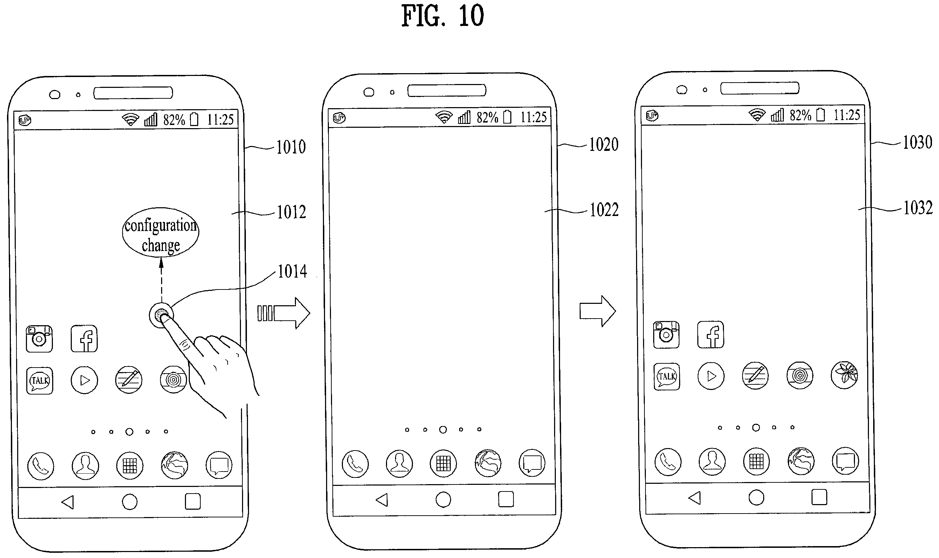

FIG. 10 is a diagram for a case that a screen image includes home screen information of a mobile device according to one embodiment of the present invention.

When a specific screen image includes home screen configuration information, if a touch input for selecting the specific screen image is received from a user, the controller 180 displays a home screen of a mobile device which is changed based on the home screen configuration information.

As shown in an embodiment 1010, if a specific screen image 1012 includes home screen configuration information, the controller 180 receives a touch input 1014 for dragging the specific screen image 1012 in the downward direction or the upward direction from a user.

As shown in an embodiment 1020, the controller 180 executes an application for configuring a home screen in response to the received touch input. For example, if a specific screen image includes home screen configuration information, the controller 180 executes the home screen configuration application of a mobile device.

A current screen 1022 corresponds to a current home screen.

As shown in an embodiment 1030, the controller 180 changes a configuration of a home screen based on home screen configuration information included in the specific screen image 1012.

A current screen 1032 corresponds to a changed home screen. The current screen is changed identically to the specific screen image 1012. In particular, identical to the specific screen image 1012, plural icons are arranged to the current screen 1032.

According to the present invention, if a home screen is stored as a screen image and an input for selecting the screen image is received from a user in the future, the screen image can be utilized as a preset capable of changing home screen configuration based on home screen configuration information. That is, if the user selects the screen image including the home screen configuration information, it is able to configure a home screen identical to the screen image, thereby increasing user convenience.

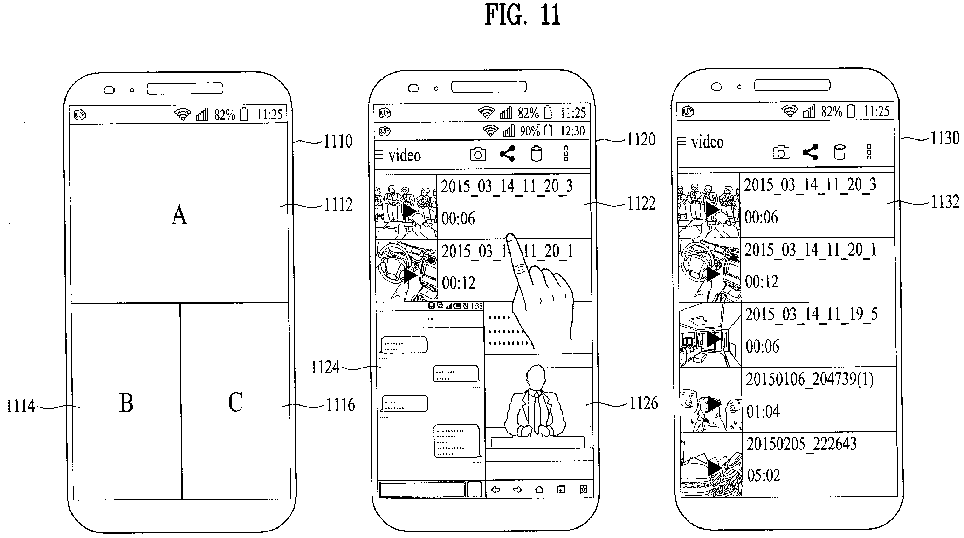

FIG. 11 is a diagram for a method of implementing a screen image form in a manner of combining a plurality of screen images with each other according to one embodiment of the present invention.

If a plurality of screen images are displayed and an input for selecting a specific screen image from a plurality of the screen images is received from a user, the controller 180 displays an application execution screen related to the specific screen image.

As shown in an embodiment 1110, the controller 180 can display a plurality of screen images. In this case, a plurality of the screen images include a screen image A 1112, a screen image B 1114 and a screen image C 1116. The controller 180 can generate a single screen image in a manner of combining at least one selected from the group consisting of a screen image A 1112, the screen image B 1114 and the screen image C 1116 with each other.

For example, the controller 180 can generate a single screen image by combining the screen image A 1112 and the screen image B 1114 with each other.

And, the controller 180 can generate a single screen image in a manner of combining the screen image A 1112, the screen image B 1114 and the screen image C 1116 with each other.

As shown in an embodiment 1120, the controller 180 can display a plurality of screen images. In this case, plural screen images include a first screen image 1122, a second screen image 1124 and a third screen image 1126.

In this case, the first screen image 1122 corresponds to the screen image A 1112, the second screen image 1124 corresponds to the screen image B 1114 and the third screen image 1126 corresponds to the screen image C 1116.

The controller 180 receives an input for selecting the first screen image 1122 corresponding to a specific screen image from a plurality of the screen images.

As shown in an embodiment 1130, the controller 180 displays an application execution screen 1132 related to the first screen image 1122 in response to the received input.

For example, if the first screen image 1122 includes music application information, the controller 180 displays a music application execution screen 1132.

According to the present invention, a single screen image can be configured in a manner of combining a plurality of screen images with each other. Hence, a user can configure a screen image with items used for checking latest update status. If an input for selecting a specific screen image is received from the user, the controller 180 executes an application related to the specific screen image and displays a specific application execution screen.

It is able to compare a previous screen image and a following screen image with each other in a manner of putting a plurality of screen images in a place.

Moreover, since a screen image is stored in a memory in an image form, it is easy to share the screen image with other person and easy to keep the screen image.

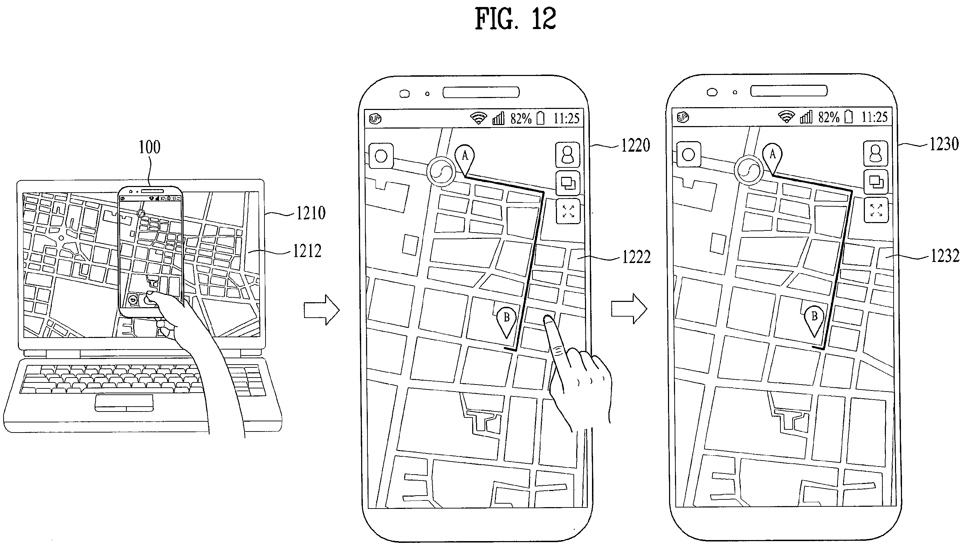

FIG. 12 is a diagram for a method of capturing an external device screen using a camera and storing a captured image as an image transformed into an application screen of a mobile device version in a memory according to one embodiment of the present invention.

The controller 180 captures a screen of an external device using a camera 121, extracts tag information from the captured screen, executes an application of a mobile device version corresponding to the captured screen, displays an execution screen of the application and stores the execution screen of the application in a memory 170 as a specific screen image.

As shown in an embodiment 1210, the controller 180 captures a screen 1212 of an external device using a camera 121.

As shown in an embodiment 1220, the controller 180 extracts tag information from the captured screen. In particular, if such a big screen as a PC screen, a TV screen, or a tablet PC screen is captured, the controller 180 recognizes the captured image and automatically extracts a URL, input information, application information an application name and the like from the recognized image.

The controller 180 executes an application of a mobile device version corresponding to the captured screen based on the extracted tag information. The controller 180 displays an execution screen of the application and stores the execution screen of the application in the memory 170 as a specific screen image 1222.

As shown in an embodiment 1230, if an input for selecting the specific screen image 1222 is received from a user, the controller 180 executes a specific application related to the specific screen image 1222 and displays an execution screen 1232 of the specific application.

According to the present invention, if a notebook screen is captured by a camera of a mobile device, tag information is extracted from a picture of the notebook screen, an application related to the picture is executed based on the extracted tag information and both the tag information and the screen image are stored in the memory. Hence, when a continuous work is performed among plural devices, a seamless user interface can be provided to a user.

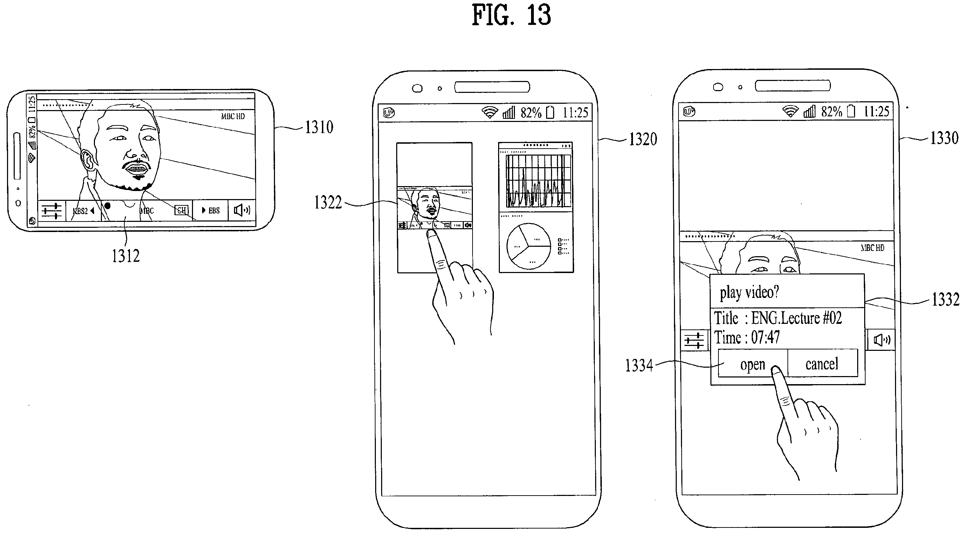

FIG. 13 is a diagram for a case that a screen image includes multimedia playback information according to one embodiment of the present invention.

When a specific screen image includes multimedia playback information, if an input for touching a specific screen image is received from a user, the controller 180 plays a multimedia from a playing time of which the specific screen image is generated.

As shown in an embodiment 1310, the controller 180 checks whether or not a screen image 1312 includes multimedia information. If the screen image 1312 includes a specific playback file name, a playback button image, playback time information, subtitle information and the like, the controller 180 determines it as the screen image 1312 includes multimedia information. And, when the screen image 1312 is generated using executed application information, the controller 180 can determine as the screen image 1312 includes multimedia information.

In this case, the multimedia information corresponds to information on a video player and information on a music player.

The controller 180 stores the screen image in the memory 170.

As shown in an embodiment 1320, an input for selecting a screen image 1322 including multimedia information is received from a user after prescribed time elapses.

As shown in an embodiment 1330, if it is determined as the screen image 1322 includes the multimedia information, the controller 180 displays a message box 1332 including contents that the screen image 1322 is played from playing time corresponding to the time of generating the screen image 1322.

In this case, the controller 180 extracts playback information of a specific multimedia from the generated screen image at the time of generating the screen image and stores the extracted playback information of the specific multimedia in the memory 170.

If a specific input such as an open button 1334 is received from a user, the controller 180 plays the multimedia from the time when a screen image is generated.

According to the present invention, when a user captures a multimedia playback screen, if a screen image of the playback screen is selected in the future, it is able to display a message box capable of playing a video from a captured scene and the screen image can be utilized as a bookmark function in a video and a music file, thereby increasing user convenience.

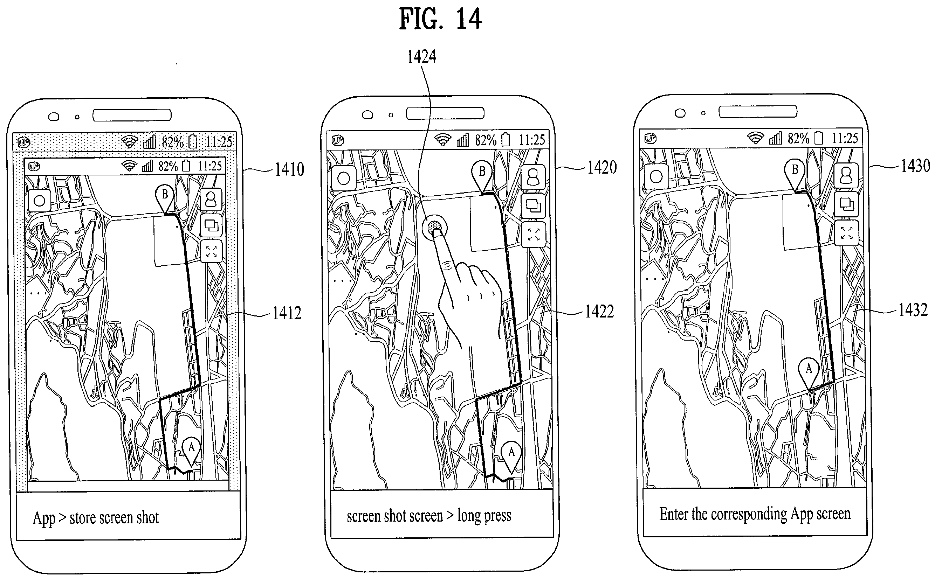

FIG. 14 is a diagram for a case that a screen image includes navigation information according to one embodiment of the present invention.

When a specific screen image includes navigation information, if a touch input for selecting the specific screen image is received from a user, the controller 180 displays a route to a destination from a starting point corresponding to timing of receiving the touch input.

As shown in an embodiment 1410, if an image capture input is received from a user in a state that a navigation application is executed, a screen image 1412 of which a current screen is captured is generated.

If the screen image 1412 includes at least one selected from the group consisting of a map, a starting point, a stopover, a destination, current speed, time taken to a destination and time remaining to a destination, the controller 180 determines it as the screen image 1412 includes navigation information.

As shown in an embodiment 1420, if a screen image 1422 includes navigation information, the controller 180 receives a touch input 1424 for selecting the screen image 1422 from a user.

As shown in an embodiment 1430, the controller 180 executes a navigation application in response to the received touch input and displays a route to a destination from a starting point corresponding to timing of receiving the touch input 1424 from the user.

Hence, in a navigation screen 1432, a point on which the touch input 1424 of the user is received becomes a starting point and a remaining route to a destination is displayed in the navigation screen.

According to the present invention, a screen image is generated in a state that a starting point corresponds to A point, a route corresponds to B point and C point, and a destination corresponds to D point. After prescribed time elapses, If a touch input for selecting the screen image is received from a user, a navigation application is executed, the starting point is changed to the B point, the route is changed to the C point and the destination is changed to the D point. Hence, it is able to display an application execution screen to which elapse of time is reflected, thereby increasing user convenience.

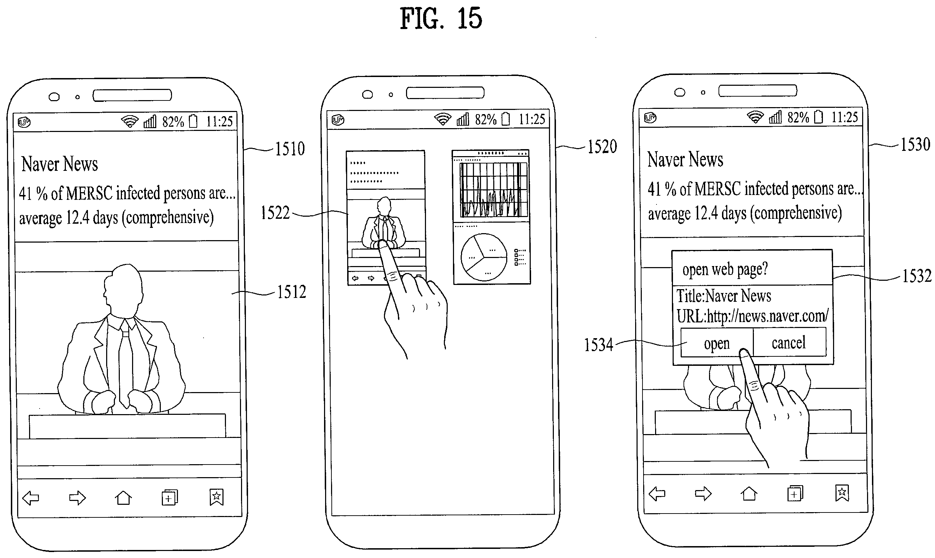

FIG. 15 is a diagram for a case that a screen image corresponds to a web browser screen according to one embodiment of the present invention.

When a specific screen image corresponds to a web browser screen, if a touch input for selecting the specific screen image is received from a user, the controller 180 access a specific web browser address, which is stored at the time of generating the specific screen image.

As shown in an embodiment 1510, the controller 180 checks whether or not a screen image 1512 includes web browser screen information. In this case, if the screen image 1512 includes a URL domain address, a specific word such as www, or a word of a specific portal, the controller 180 determines it as the screen image 1512 includes the web browser screen information.

The controller 180 stores the screen image in the memory 170.

In an embodiment 1520, after a prescribed time elapses, input for selecting a screen image 1522 including web browser screen information is received from the user.

As shown in an embodiment 1530, if it is determined as the screen image 1522 includes the web browser screen information, the controller 180 displays a message box 1532 including contents of accessing a specific web browser address. In this case, the controller 180 extracts the specific web browser address from a generated screen image at the time of generating the screen image and stores the extracted specific web browser address in the memory 170.

If a specific input such as an open button 1534 is received from a user, the controller 180 accesses the specific web browser address.

According to the present invention, if an input for selecting a specific screen image is received from a user, it is able to immediately access an address of a sub concept of a home page of a specific site indicated by the specific screen image rather than a home page address of the specific site by utilizing a deep link technology.

In this instance, the deep link corresponds to a hypertext link making a user link to a different web page rather than a homepage on a website. In this instance, such a terminology as deep indicates a depth of a page in a layer structure of a web page in a site.

Hence, a user accesses a homepage of a specific site and may be then able to immediately access an address of a sub concept of the homepage of the specific site without passing through many steps, thereby reducing access time and increasing user convenience.

According to one embodiment of the present invention, if an input for selecting a screen image is received, it is able to immediately access sub concept information of an application using the screen image only in a manner of executing an application related to the screen image using tag information of the screen image and displaying an application execution screen using a deep link technology. Hence, since it is not necessary for the user to execute the application again from the first step, it is able to enhance user convenience.

According to another embodiment of the present invention, if a touch input for dragging a screen image in the downward direction is received from a user in a state of displaying the screen image, it is able to execute an application related to the screen image and display an execution screen of the application. Hence, since it is able to provide a screen updated by latest information to a user, it is able to enhance user convenience.

According to another embodiment of the present invention, when a screen image includes system configuration information, if a touch input for selecting the screen image is received from a user, it is able to change a configuration of a mobile device based on the system configuration information. Hence, the screen image can be utilized as preset information for changing the system configuration in the future and can be shared with a different mobile device. If a user to which the screen image is provided is not good at using a smart device, the user can easily change system configuration using the screen image only. Hence, it is able to enhance user convenience.

According to the other embodiment of the present invention, when a plurality of screen images are displayed and an input for selecting a specific screen image from a plurality of the screen images is received from a user, it is able to display an application execution screen related to the specific screen image. Hence, a user can configure a screen with a plurality of screen images used for checking latest update status. If the user selects the specific screen image, it is able to immediately display the application execution screen. Hence, it is able to enhance user convenience.

While the present specification has been described and illustrated herein with reference to the preferred embodiments and diagrams thereof, the present specification may be non-limited to the aforementioned embodiments and it will be apparent to those skilled in the art that various modifications and variations can be made therein without departing from the spirit and scope of the present specification. Thus, it is intended that the present specification covers the modifications and variations of this invention that come within the scope of the appended claims and their equivalents.

## Claims

1. A mobile device, comprising:
a display;
a controller configured to:
cause the display to display a plurality of screen images;
obtain tag information associated with a first screen image, among the plurality of screen images, in response to a user input selecting the first screen image; and
cause the display to display an execution screen of a specific application related to the first screen image based on the tag information.

2. The mobile device of claim 1, wherein the controller is further configured to:
store, in a memory, application information related to the first screen image together with metadata of the first screen image.

3. The mobile device of claim 1 or 2, wherein the controller is further configured to:
recognize the first screen image based on at least one of optical character recognition (OCR), a layout of the first screen image, a design of the first screen image, or text information included in the first screen image.

4. The mobile device of any of claims 1 to 3, further comprising a wireless communication unit configured to transceive data with an external device,
wherein the controller is further configured to transmit the screen image, the tag information of the first screen image and metadata to the external device via the wireless communication unit.

5. The mobile device of any of claims 1 to 4, wherein the controller is further configured to:
cause the display to display the execution screen of the specific application in response to at least one of the user input being a contact touch received at the first screen image for more than a threshold period of time, the user input being a tapping input received at the first screen image for more than a threshold number of times, or the user input being a drag input that begins at the first screen image and extends either upward or downward.

6. The mobile device of any of claims 1 to 5, wherein the controller is configured to:
cause the display to display the execution screen of the specific application in response to the user input being a drag input that begins at the first screen image and extends either upward or downward.

7. The mobile device of any of claims 1 to 6, wherein the first screen image comprises system configuration information, and wherein the controller is further configured to:
change a configuration of the mobile device based on the system configuration information and in response to a further user input selecting the first screen image.

8. The mobile device of any of claims 1 to 7, wherein the first screen image comprises configuration information of the specific application, and wherein the controller is further configured to:
change a configuration of the specific application based on the configuration information of the specific application and in response to a further user input selecting the first screen image.

9. The mobile device of claim 8, further comprising:
a transmitter, and wherein the controller is further configured to:
transmit to an external device, via the transmitter, both the first screen image and the configuration information of the specific application.

10. The mobile device of claim 1, wherein the first screen image comprises home screen configuration information, and wherein the controller is further configured to:
cause the display to display a home screen of the mobile device based on the home screen configuration information and in response to a further user input selecting the first screen image.

11. The mobile device of any preceding claim, wherein the controller is further configured to:
cause the display to display the execution screen of the specific application in response to the user input selecting the first screen image.

12. The mobile device of any preceding claim, further comprising a camera, and wherein the controller is configured to:
capture a screen image of an external device using the camera;
obtain second tag information from the captured screen image of the external device;
cause the display to display an execution screen of a further specific application of a mobile device version of an application corresponding to the captured screen and based on the obtained second tag information; and
store the execution screen of the further specific application in the memory as a specific screen image.

13. The mobile device of any preceding claim, wherein the first screen image comprises playback information of a multimedia item, and wherein the controller is further configured to:
play the multimedia item beginning from a time that corresponds to a time of the displaying of the first screen image.

14. The mobile device of any preceding claim, wherein the first screen image comprises navigation information, and wherein the controller is further configured to:
cause the display to display a route to a destination beginning at a starting point corresponding to a point at which the user input is received at the first screen image.

15. The mobile device of any preceding claim, wherein the first screen image corresponds to a web browser screen, and wherein the controller is further configured to:
access a specific web browser address, which is stored when the first screen image is displayed, when the user input is received from a user.
